# EUROPEAN PATENT SPECIFICATION

(11) **EP 0 566 692 B1**
(45) Date of publication and mention of the grant of the patent: **26.08.1998**
(21) Application number: 92905205.8
(22) Date of filing: 10.01.1992
(51) Int. Cl.: C08K 5/06, C08F 259/08, C08F 299/00, C08L 27/16, C08J 3/24

(54) **CURING FLUOROCARBON ELASTOMERS**
HÄRTEN VON FLUOROELASTOMEREN
CUISSON D'ELASTOMERES AU FLUOROCARBONE

(30) Priority: 11.01.1991 US 639961
(43) Date of publication of application: 27.10.1993
(60) Divisional application: 98102543.0
(73) Proprietor: DYNEON LLC, Oakdale, Minnesota 55128 (US)
(72) Inventor: GUERRA, Miguel, A., Saint Paul, MN 55133 (US); STIVERS, David, A., Saint Paul, MN 55133 (US)
(74) Representative: Molyneaux, Martyn William
(86) International application number: US9200170
(87) International publication number: WO9212199

(56) References cited:
- US-A- 4 358 559
- PATENT ABSTRACTS OF JAPAN vol. 9, no. 88 (C-276)(1811) 17 April 1985

## Description

This invention relates to fluorocarbon elastomers and their curing. In another aspect it relates to fluorinated ether compositions used in curing fluorocarbon elastomers. In another aspect it relates to fluorocarbon gum composition containing fluorinated ether compositions. In a further aspect it relates to a cured, shaped article of fluorocarbon elastomer, such as automotive fuel line hose and O-ring seals.

Fluorocarbon elastomers are synthetic elastomeric polymers with a high fluorine content - see, for example, West, A.C. and Holcomb, A.G., "Fluorinated Elastomers," Kirk-Othmer, Encyclopedia of Chemical Technology, Vol. 8, pp. 500-15 (#3rd ed., John Wiley & Sons, 1979). Fluorocarbon elastomers, particularly the copolymers of vinylidene fluoride with other ethylenically unsaturated halogenated monomers, such as C₃F₆ (hexafluoropropene) have become the polymers of choice for high temperature applications, such as seals, gaskets, and linings, especially when shaped articles thereof are subject to exposure to aggressive or harsh environments, such as solvents, lubricants, and oxidizing or reducing conditions. A major drawback to many applications of shaped articles made of such fluorocarbon elastomers has been their inability to satisfactorily function at low temperatures. At temperatures only slightly below 0°C, the articles become stiff and fail to perform satisfactorily. Many fluoroelastomers also exhibit a tendency to become "scorchy", i.e., they cure prematurely or too rapidly when compounded.
Fluoroelastomers may also adhere to dies upon curing making removal of the shaped fluoroelastomer article difficult.

Such fluorocarbon elastomers in general can be compounded and cured to have high tensile strength, good tear resistance, and low compression set. Such compounded polymers are typically fabricated into automotive engine oil seals, fuel system components, such as fuel line hoses and O-ring seals, and drive train seals. Smaller, hotter-running automotive engines, modern fuel blends, and aggressive oil additives and other chemical substances used in operating the engines have made fluorocarbon elastomers the polymers of choice for a host of elastomeric engine components where reliable sealing is required and of environmental concern - see Brullo, R.A., "Fluoroelastomer Rubber for Automotive Applications", Automotive Elastomer & Design, June 1985, and "Fluoroelastomers Seal Up Automotive Future," Materials Engineering, October, 1988.

Most commercially available fluorocarbon elastomers, such as the illustrative polymers described above are sold, for example, under the trademarks "AFLAS", "FLUOREL" and "VITON". Some of these are crosslinked with aromatic polyhydroxy compounds, such as bisphenols, which are compounded with the elastomer gum along with a curing accelerator, such as a quaternary phosphonium salt, and acid acceptors, such as magnesium oxide and calcium hydroxide - see, for example, U.S. Pat. No. 4,287,320 (Kolb). Others are bromine-containing, peroxide-curable fluorocarbon elastomers - see U.S. Pat. Nos. 4,035,565 (Apotheker et al.) and 4,450,263 (West).

Several general types of fluorinated ethers have been described in the literature. One type is characterized by one of several homopolymeric segments or blocks of repeating units of the formula -CF(CF₃)CF₂-O- and made from hexafluoropropylene epoxide, see e.g., U.S. Pat. No. 3,250,807 (Fritz et al.). Another type is that characterized by blocks of repeating units of the formula -CF₂CF₂O- and made from tetrafluoroethylene epoxide, see for example, U.S. Pat. No. 3,125,599 (Warnell). Others, made by reacting oxygen with tetrafluoroethylene or hexafluoropropylene, are characterized by a backbone made of repeating -CF₂O- units, see e.g., U.S. Pat. No. 3,392,097 (Carraro et al.), or -CF(CF₃)CF₂O- units, see e.g., U.S. Pat. No. 3,442,942 (Sianesi et al.), or, in addition to either of these units, units of the formula -CF(CF₃)O-, see e.g., U.S. Pat. No. 3,699,145 (Sianesi et al.), or a backbone consisting of randomly distributed -CF₂O- and CF₂CF₂O- units, see e.g. U.S. Pat. No. 3,715,378 (Sianesi et al.), or a backbone made up of -CF(CF₃)CF₂O- and -CF₂CF₂O- units and, optionally, -CF₂O- and -CF(CF₃)O- units. Another type of fluorinated ether is that characterized by backbone units of the formula -(CF₂)ₐO(CF₂)_{b}- made by photopolymerization, see e.g., U.S. Pat. No. 3,504,411 (Rice) and U.S. Pat. No. 3,849,594 (Mitsch et al.).

U.S. Pat. Nos. 3,810,874 (Mitsch et al.) and 4,094,911 (Mitsch et al.) disclose poly(perfluoroalkylene oxides) terminated with polymerizable functional groups which can be polymerized to prepare certain polymers, e.g. polyurethanes, having low glass transition temperatures and low-temperature flexibility. U.S. Pat. No. 3,810,875 (Rice et al.) discloses use of poly(perfluoroakylene oxide) peroxides with ethylenically unsaturated monomers in making block copolymers having good low-temperature flexibility. Fluorinated ethers with nonfunctional terminal moieties are sold under the trademarks "KRYTOX" and "FOMBLIN" for use as vacuum pump fluids, see e.g., G. Caporiccio et al., Ind. Eng. Chem. Prod. Res. Dev. 1982, 21, 515-19.

U.S. Pat. No. 4,810,760 (Strepparola et. al.) discloses compositions of fluoroelastomers crosslinked with dihydroxypolyfluoroethers. The dihydroxypolyfluoroethers of Strepparola contain either branched moieties, or are random copolymers containing -CF₂O- repeating units, or contain partially fluorinated repeat units. When used to crosslink fluorocarbon elastomers, the fluorinated ethers of Strepparola are said to give materials with improved heat stability and greater resistance to compression set. U.S. Pat. No. 4,894,418 (Strepparola et al.) discloses compositions of fluoroelastomers comprising, as a processing coadjuvant, a mono- or dihydroxypolyfluoroether. These mono- or dihydroxypolyfluoroethers have similar structures to those disclosed in U.S. Pat. No. 4,810,760 (Strepparola et al.). The addition of these mono- or dihydroxypolyfluoroethers to conventional vulcanizable fluoroelastomer compositions is said to improve the processability of the resulting mixture and the low temperature brittle point of the cured mixture.

U.S. Pat. No. 3,632,788 (Stivers et al.) discloses fluoro-olefinic elastomeric formulations with improved low temperature flexibility and softness. The improved properties are imparted by the incorporation of one or more low melting low molecular weight, polar, fluoroaliphatic compounds.

U.S. Pat. No. 5,026,786 (Marchionni et al.) discloses a process for the manufacture of certain perfluoropolyethers. These perfluoropolyethers comprise randomly distributed perfluoroxyalkylene units. These perfluoropolyethers are said to improve the extrudability of elastomer compositions and to decrease the adhesion of vulcanized articles to molds.

U.S. Pat. No. 4,278,776 (Mauro et al.) discloses vulcanizable mixes based on fluoroelastomer and which comprise, as a processing aid, at least one fluorinated polyamide. Certain perfluoropolyethers are said to improve the low temperature properties of the vulcanisates.

European Pat. Pub. No. 222,201 (Tommasi et al.) discloses vulcanizable rubber blends comprising certain perfluoropolyethers. These perfluoropolyethers have brominated or fluorinated end groups. These blends are said to have improved processability.

European Pat. Pub. No. 310,966 (Arcella et al.) discloses rubber blends comprising certain perfluoropolyethers. These perfluoropolyethers comprise perfluoroalkyl end groups. These rubber blends are said to have improved mold-release properties.

Briefly, in one aspect, this invention provides a fluorocarbon elastomer composition comprising (1) fluorocarbon elastomer gum, such as a copolymer of vinylidene fluoride and hexafluoropropene, and, (2) a fluorinated ether composition comprising hydroxy-terminated, fluorinated mono- or polyether of linear and regular structure, wherein said hydroxy is reactive with said gum and the average number of said hydroxy groups per flourinated ether molecule in said ether composition is greater than 1.0 and less than 2.0.

In a further aspect of this invention there is provided a method of preparing an elastomer composition, said method comprising mixing the aforementioned (1) fluorocarbon elastomer gum and (2) a fluorinated ether composition as defined above.

The hydroxy-terminated, fluorinated mono- or polyether comprises a perfluoroether structure which consists or consists essentially of two or more perfluoroalkylene moieties, e.g. -CF₂- and -CF₂CF₂-, bonded together by ether oxygen atoms in a linear (or non-branched), regular (or non-random), divalent, and acyclic perfluoroether structure, e.g. a perfluoroalkyleneoxyalkylene. Each end of the perfluoroether structure is bonded to a terminal group, at least one of such terminal groups having a hydroxy moiety reactive with said fluorocarbon elastomer gum, for example, -CH₂OH. Said fluorinated ether composition acts as a low-temperature flexibilizer and imparts improved low-temperature flexibility to the cured fluorocarbon elastomer composition.

In another aspect, said fluorinated ether composition imparts improved mold-release properties to the cured fluorocarbon elastomer composition.

In a further aspect, said fluorocarbon elastomer composition can be compounded to be resistant to scorch during curing.

As indicated above, the average number of said reactive hydroxy groups per fluorinated ether molecule in the fluorinated ether compositions is greater than 1.0 and less than 2.0.

The above fluorocarbon elastomer gum and fluorinated ether composition can be compounded or mixed in one or several steps, and then the mixture can be processed and shaped, for example, by extrusion (for example, in the form of a hose or hose lining) or molding (for example, in the form of an O-ring seal). The shaped article can then be heated to cure the gum composition and form a cured elastomer article.

The cured fluorocarbon elastomer mixture has excellent low-temperature flexibility while retaining the desired physical properties, for example tensile strength and elongation, of conventionally compounded and cured fluorocarbon elastomer compositions. Particularly useful articles that can be fabricated from the fluorocarbon elastomer compositions of this invention are fluorocarbon elastomer automotive components, such as those described in the two above cited journal articles of Brullo, e.g., fuel line hoses.

The fluorinated ether composition useful in this invention comprises functional fluorinated ethers which can be represented by the Formula

HO-Q-R_{f}-O-(R_{fo})ₙ-R_{f}-Q-OH I

and have an average molecular weight between 250 and 3000. In formula I, -R_{f}-O-(R_{fo})ₙ-R_{f}- represents one type of said perfluoroether structure and HO-Q- represents the terminal groups, where Q is a divalent linking group and OH is a hydroxy moiety reactive with said fluorocarbon elastomer. The average number of OH groups per fluorinated ether molecule of the fluorinated ether composition is greater than 1.0 and less than 2.0. The divalent linking group Q is preferably selected from the group consisting of -C_{y}H_{2y}- where y is 1 to 20, -C₆H₄-, -C₆H₃Cl-, -OC₂H₄-, or combinations of said groups. R_{f} is a non-branched, perfluoroalkylene group of 1 to 20 carbon atoms. R_{fo} is a perfluoroalkyleneoxy group selected from the group consisting of -(CF₂)₂-O-, -(CF₂)₃-O-, -(CF₂)₄-O-, -CF₂-CF₂-O-CF₂-O-, -CF₂-CF₂-O-CF₂-CF₂-O-CF₂-O-. The subscript n is a number from 0 to 30. When n is greater than 1.0, (R_{fo})ₙ is a homopolymer.

The fluorocarbon elastomer compositions of the present invention may be further compounded, and cured according to standard methods. In order to form cured articles, the compositions of the present invention comprising the fluorochemical ether represented by Formula I will not need to be further compounded with a crosslinking agent, or with a conventional cure system, such as a polyhydroxy, or a peroxide cure system.

The most common crosslinking agent for fluorocarbon elastomer gum is a polyhydroxy compound. The polyhydroxy compound used in its free or non-salt form and as the anionic part of the salt component of the crosslinking agent can be any of those polyhydroxy compounds known in the art to function as a crosslinking agent or co-curative for fluoroelastomers, such as those polyhydroxy compounds disclosed in U.S. Pat. Nos. 4,259,463 (Moggi et al.), 3,876,654 (Pattison), 4,233,421 (Worm), and U.S. Defensive Publication T107,801 (Nersasian). For example, representative aromatic polyhydroxy compounds include any one of the following: di-, tri-, and tetrahydroxybenzenes, naphthalenes, and anthracenes, and bisphenols of the Formula 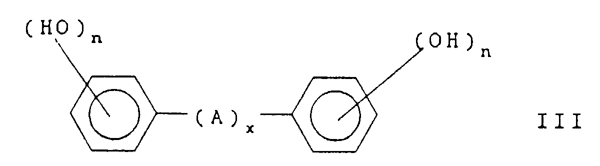 wherein A is a difunctional aliphatic, cycloaliphatic, or aromatic radical of 1 to 13 carbon atoms, or a thio, oxy, carbonyl, sulfonyl, or sulfonyl radical, A is optionally substituted with at least one chlorine or fluorine atom, x is 0 or 1, n is 1 or 2, and any aromatic ring of the polyhydroxy compound is optionally substituted with at least one atom of chlorine, fluorine, or bromine atom, or carboxyl or an acyl radical (e.g., -COR, where R is H or a C₁ to C₈ alkyl, aryl or cycloalkyl group) or alkyl radical with, for example, 1 to 8 carbon atoms. It will be understood from the above bisphenol Formula III that the -OH groups can be attached in any position (other than number one) in either ring. Blends of two or more such compounds can also be used. One of the most useful aromatic polyphenols is the bisphenol compound known as Bisphenol AF, which is 2,2-bis(4-hydroxyphenyl)hexafluoropropane. The compounds 4,4'-dihydroxydiphenyl sulfone (Bisphenol S) and 2,2-bis(4-hydroxyphenyl)propane (Bisphenol A) are also considered useful. Another useful aromatic polyhydroxy compound is hydroquinone. Others are dihydroxybenzenes such as catechol, resorcinol, 2-methyl resorcinol, 5-methyl resorcinol, 2-methyl hydroquinone, 2,5-dimethyl hydroquinone, and 2-t-butyl hydroquinone, 1,5-dihydroxynaphthalene and 9,10-dihydroxyanthracene.

Representative aliphatic polyhydroxy compounds which can also be used as the polyhydroxy compound include fluoroaliphatic diols, e.g. 1,1,6,6-tetrahydrooctafluorohexanediol, and others such as those described in U.S. Pat. No. 4,358,559 (Holcomb et al.) and references cited therein. Derivatives of polyhydroxy compounds can also be used such as those described in U.S. Pat. No. 4,446,270 (Guenthner et al.) and include, for example, 2-(4-allyloxyphenyl)-2-(4-hydroxyphenyl)propane. Mixtures of two or more of the polyhydroxy compounds can be used.

The organo-onium compound which can be incorporated into or compounded with the fluoroelastomer gum as a co-curing agent or vulcanization accelerator include those known and described in the art - see, for example, the description of such organo-onium compounds in U.S. Pat. No. 4,882,390 (Grootaert et al.) The organo-onium compounds which can be used include quaternary organo-onium compounds, such as ammonium, arsonium, phosphonium, stibonium, amino-phosphonium, phosphorane (e.g., triarylphosphorane), and iminium compounds, and sulfonium compounds. Mixtures of organo-onium compounds are also useful in this invention. The ammonium, phosphonium, arsonium, and stibonium salts or compounds preferably have the general formula: 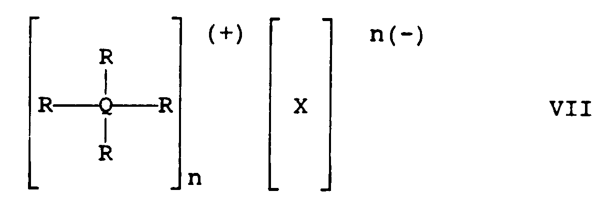 where Q is nitrogen, phosphorous, arsenic or antimony; X is an organic or inorganic anion (e.g., halide, sulfate, acetate, phosphate, phosphonate, hydroxide, alkoxide, phenoxide, or bisphenoxide); n is equal to the valence of the anion X; and each R is independently an alkyl, aryl, alkenyl, or combinations thereof. Each R can be substituted with chlorine, fluorine, bromine, cyano, -OR' or -COOR' where R' is a C₁ to C₂₀ alkyl, aryl, aralkyl, or alkenyl. Any pair of the R groups can be connected with each other and with the Q atom to form a heterocyclic ring. A preferred organo-onium compound where the aromatic polyhydroxy compound used is Bisphenol AF, is where in formula VII the Q is phosphorous, X is a chloride anion, n is 1, and three of the R groups are phenyl moieties and the remaining R group is a benzyl moiety. A preferred class of formula VII is where at least one of the R groups is alkyl or alkenyl. In another class of quaternary organo-onium compounds which can be used in this invention, the nitrogen, phosphorus, arsenic or antimony atom may be a heteroatom in a cyclic structure, e.g., 8-benzyl-1,8-diaza-bicyclo[5,4,0]-7-undecenium chloride. Another class which can be used is amino-phosphonium compounds, some of which are described, for example, in U.S. Pat. No. 4,259,463 (Moggi et al.). Another useful class is phosphorane compounds disclosed, for example, in U.S. Pat. Nos. 3,752,787 (de Brunner) and 4,882,390 (Grootaert et al.). Another class of quaternary organo-onium compounds useful in this invention are iminium compounds, where are also described in said U.S. Pat. No. 4,882,390.

The compounded gum formulation of this invention can also include processing agents, such as those conventionally used to aid in the molding or extrusion of the formulation e.g. carnauba wax or dichlorodiphenyl sulfone, including those of the formula R_{f}SO₂NHR", where R_{f} is a fluoroaliphatic radical such as a perfluoroalkyl, e.g., CₙF₂ₙ₊₁ where n is 4 to 20, or perfluorocycloalkyl, e.g., CₙF₂ₙ₋₁ where n is 5 to 20. Another type of processing aid which can be used in this invention is diorgano sulfur oxides, such as those described in U.S. Pat. No. 4,287,320 (Kolb).

Fillers can be mixed with the fluoroelastomer gum to improve molding characteristics and other properties. When a filler is employed, it can be added to the vulcanization recipe in amounts of up to about 100 parts per hundred parts by weight of gum, preferably between about 15 to 50 parts per hundred parts by weight of the gum. Examples of fillers which may be used are reinforcing thermal grade carbon blacks or non-black pigments of relatively low reinforcement characteristics such as clays and barytes.

Fluorocarbon elastomers which can be used in this invention include those described, for example, in the aforementioned prior art, e.g., U.S. Pat. Nos. 3,159,609 (Harris et al.), 3,467,635 (Brasen et al.), 4,214,060 (Apotheker), 4,233,421 (Worm), and 4,263,414 (West). Some of these are commercially available, sold under trademarks such as "Fluorel" and "Viton", and are copolymers whose interpolymerized units are generally derived from vinylidene fluoride and one or more other co-monomers. Other useful fluorocarbon elastomers include copolymers of tetrafluoroethylene and propylene, such as those commercially available as AFLAS™ elastomers. Among the fluoroelastomer polymers which may be compounded in accordance with this invention are the elastomeric copolymers whose interpolymerized units are derived from two or more of the following fluoromonomers: vinylidene fluoride, hexafluoropropene, chlorotrifluoroethylene, 2-chloropentafluoropropene, fluorinated methyl vinyl ether, tetrafluoroethylene, 1-hydropentafluoropropene, dichlorodifluoroethylene, trifluoroethylene, 1,1-chlorofluoroethylene, and mixtures thereof. Said fluoromonomers may also be copolymerized with other compounds such as non-fluorinated alpha-olefin co-monomers, e.g., ethylene or propylene. The preferred elastomers are copolymers of vinylidene fluoride with at least one terminally ethylenically-unsaturated fluoromonomer containing at least one fluorine atom substituent on each double-bonded carbon atom, each carbon atom of said fluoromonomer being substituted only with fluorine and optionally with chlorine, hydrogen, lower fluoroalkyl radical, or lower fluoroalkoxy radical; particularly preferred are hexafluoropropene, tetrafluoroethylene, chlorotrifluroethylene, and 1-hydropentafluoropropene. Particularly preferred are the fluorinated elastomers produced by copolymerizing vinylidene fluoride with hexafluoropropene as described in U.S. Pat. Nos. 3,051,677 (Rexford) and 3,318,854 (Pailthorp et al.), and those copolymers produced by copolymerizing vinylidene fluoride, hexafluoropropene, and tetrafluoroethylene as described in U.S. Pat. No. 2,968,649 (Honn et al.). The elastomeric copolymers of hexafluoropropene and vinylidene fluoride preferably will have between about 15 and about 50 mole percent hexafluoropropene, optionally with the addition of up to 30 mole percent tetrafluoroethylene. Mixtures or blends of elastomers, e.g., of different viscosities, are also suitable.

The relative amounts of the various ingredients in preferred fluorocarbon elastomer compositions of this invention, chosen to provide the desired cure rate and degree of cure, are illustrated for onium curable elastomer compositions and for peroxide curable elastomer systems in the table below. The amount of fluorinated ether composition will vary, but generally will be present in an amount sufficient to impart improved low-temperature properties to the cured composition. The amounts given are in terms of parts per 100 parts by weight of the gum, "phr".

| | ELASTOMER SYSTEM | |
|---|---|---|
| INGREDIENTS | ONIUM CURABLE | PEROXIDE CURABLE |
| Fluorinated ether composition of this invention | 2-50 phr | 2-50 phr |
| | | |
| Polyhydroxy compound (crosslinking agent) | 0*-5 phr | 0 |
| | | |
| Organo-onium compound (co-curing agent) | 0-2 phr | 0 |
| | | |
| Bivalent metal oxide and/or hydroxide (acid acceptor) | 2-30 phr | 0 |
| | | |
| Peroxide | 0 | 1-6 phr |
| | | |
| TAIC (crosslinking agent) | 0 | 0*-10 phr |
| | | |
| Fillers | 0-100 phr | 0-100 phr |

| | | |
|---|---|---|
| *Note that when the fluorinated ether compositions of Formula I are used, it is not required to include crosslinking agents to affect cure. | | |

The aforementioned amounts of the fluorinated ether composition of this invention, which impart improved low-temperature properties to the cured composition, also impart improved mold-release properties to the cured composition. If desired, the amount of the fluorinated ether may be only an amount sufficient to impart improved mold-release properties to the cured composition. Generally, as little as 0.5 phr of the fluorinated ether composition will be sufficient to impart improved mold-release properties.

In accordance with this invention, the desired amounts of compounding ingredients and other conventional adjuvants or ingredients are added to the unvulcanized fluorocarbon gum stock and intimately admixed or compounded therewith by employing any of the usual rubber mixing devices such as Banbury mixers, roll mills, or any other convenient mixing device. The temperature of the mixture on the mill typically will not rise above about 120°C. During milling the components and adjuvants are distributed uniformly throughout the gum. The curing process typically comprises extrusion of the compounded mixture or pressing the compounded mixture in a mold, e.g., a cavity or a transfer mold, and subsequent oven-curing. Pressing of the compounded mixture (press cure) is usually conducted at a temperature between about 95°C and about 230°C, preferably between about 150°C and about 205°C, for a period of from 1 minute to 15 hours, typically from 5 minutes to 30 minutes. A pressure of between about 700 kPa and about 20,600 kPa is usually imposed on the compounded mixture in the mold. The molds first may be coated with a release agent, such as a silicone oil, and prebaked. The molded vulcanizate is then usually post-cured (oven-cured) at a temperature usually between about 150°C and about 315°C., typically at about 232°C, for a period of from about 2 hours to 50 hours or more depending on the cross-sectional thickness of the article. The compositions of this invention can be used to form seals, O-rings, gaskets, etc.

Objects and advantages of this invention are illustrated in the following nonlimiting examples.

### TEST METHODS

In the following examples, indicated results were obtained using the following test methods:
Hardness ASTM D 2240-85 Method A. A Type A-2 Shore Durometer was used. Units reported in parts.
Tensile Strength at Break, Elongation at Break, and Modulus at 100% Elongation. ASTM D 412-75 on sample cut from 1.8 mm sheet with ASTM Die D. Units reported in psi.
10% Retraction (TR-10) ASTM D1329. Units reported in °C Molecular Weight and Functionality Determined by ¹⁹F NMR end group analysis.
Mooney Viscosity ASTM 1646-87

In the examples, the preparation of various fluorinated ether compositions and their use as low temperature flexibilizers for fluorocarbon elastomer gums are described. In preparing the fluorinated ether compositions, commercially available aliphatic ethers such as those represented by the formula HO-(CH₂CH₂O)ₙ-H were converted to the corresponding mono- or di- acetates such as CH₃(CO)O-(CH₂CH₂O)ₙ-(CO)CH₃. These acetates were then fluorinated by the direct fluorination technique as taught in WO 90/05413 (Costello et al.), or by the fluorination technique taught in U.S. Pat. No. 4,894,484 (Lagow et al.). The resulting fluorinated acetates such as CF₃(CO)O-(CF₂CF₂O)ₙ-(CO) CF₃ were hydrolyzed by treatment with methanol to give methyl esters such as CH₃O(CO)CF₂O-(CF₂CF₂)ₙ₋₂-CF₂(CO)-OCH₃. These methyl esters were then reduced to the corresponding dihydroalcohols such as HOCH₂-CF₂O-(CF₂CF₂)ₙ₋₂-CF₂CH₂OH, as described in U.S. Pat. No. 4,094,911 (Mitsch et al.).

Commercially available fluoroelastomer gums were compounded with various ingredients and cured. The physical properties of the cured composition were then tested. The gums used were copolymers which, except as otherwise indicated, have the weight percents of interpolymerized units derived from the monomers shown below. Gum D also contains a minor amount of a bromine-containing cure-site monomer.

| WEIGHT % MONOMERS | | | | | |
|---|---|---|---|---|---|
| GUM | CF₂=CH₂ | CF₂=CFCF₃ | CF₂=CF₂ | CH₂=CHCH₃ | CF₂=CFOCF3 |
| A | 62 | 38 | -- | -- | -- |
| B | 42 | 34 | 24 | -- | -- |
| C | 32 | -- | 40 | 28 | -- |
| D | 62 | 38 | -- | -- | -- |
| E | 59 | -- | 6 | -- | 35 |
| F | 32 | -- | 40 | 28 | -- |
| G | 41 | -- | 20 | -- | 39 |
| H | -- | -- | 73 | 27 | -- |

### EXAMPLE 1

A fluorinated ether composition comprising the structure HO-CH₂-CF₂-O-(CF₂CF₂O)ₙCF₂-CH₂-OH, having an average molecular weight of 1500, and an average hydroxyl functionality of 1.8, was prepared by direct fluorination of polyethylene glycol diacetate (Aldrich Chemical, Milwaukee, WI).

To 100 parts of fluoroelastomer gum A, was added 0.5 phr of triphenylbenzyl phosphonium chloride, followed by 30 phr of carbon black, 3 phr of MgO, and 6 phr of Ca(OH)₂ using a two-roll mill. To this compounded mixture was added 20 phr of the fluorinated ether composition described above. Milling continued until a homogeneous blend formed. The gum was press-cured for 15 minutes at 177°C and then post-cured for 24 hours at 204°C. The results of the tests are shown in Table 1.

### EXAMPLE 2

A fluorinated ether composition comprising the same structure as in Example 1, having an average molecular weight of 624, and an average hydroxyl functionality of 1.6, was prepared as in example 1.

100 parts of fluoroelastomer gum A was compounded, milled, press-cured, and post-cured as in Example 1 using 20 phr of the above fluorinated ether composition. The results of the tests are reported in Table 1.

### EXAMPLE 3

A fluorinated ether compositions comprising the same structure as in Example 1, having an average molecular weight of 727, and an average hydroxyl functionality of 1.5, was prepared as in Example 1.

100 parts of fluoroelastomer gum A was compounded, milled, press-cured and post-cured as in Example 1 using 20 phr of the above fluorinated ether composition. The results of the tests are reported in Table 1.

### EXAMPLE 4

A fluorinated ether composition comprising the same structure as in Example 1, having an average molecular weight of 555, and an average hydroxyl functionality of 1.8, was prepared as in Example 1.

100 parts of fluoroelastomer gum B was compounded, milled, press-cured, and post-cured as in Example 1, using 6.2 phr of the above fluorinated ether composition. The results of the tests are reported in Table 1.

### EXAMPLE 5

A fluorinated ether composition comprising the same structure as in Example 1, having an average molecular weight of 1728, and an average hydroxyl functionality of 1.6, was prepared as in Example 1.

100 parts of fluoroelastomer gum B was compounded, milled, press-cured, and post-cured as in Example 1 using 24.5 phr of the above fluorinated ether composition. The results of the tests are reported in Table 1.

### EXAMPLE 6

A fluorinated ether composition comprising the same structure as in Example 1, having an average molecular weight of 956, and an average hydroxyl functionality of 1.5, was prepared as in Example 1.

100 parts of fluoroelastomer gum B was compounded, milled, press-cured, and post-cured as in Example 1 using 20 phr of the above fluorinated ether composition. The results of the tests are reported in Table 1.

### EXAMPLE 7

A fluorinated ether composition comprising the same structure as in Example 1, having an average molecular weight of 956, and an average hydroxyl functionality of 1.5, was prepared as in Example 1 except that 0.8 parts of tributyl allyl phosphonium chloride was substituted for the 0.5 parts of triphenylbenzyl phosphonium chloride.

100 parts of fluoroelastomer gum C was compounded, milled, press-cured, and post-cured as in Example 1 using 15 phr of the above fluorinated ether composition. The results of the tests are reported in Table 1.

### COMPARATIVE EXAMPLES 1-C, 2-C AND 3-C

For comparative purposes, the fluoroelastomer gums A, B, and C were compounded, milled, press-cured, and post-cured as in Example 1, substituting 2 phr of Bisphenol AF for the fluorinated ether compositions of the previous Examples.

### EXAMPLE 8

A fluorinated ether composition comprising structure HO-CH₂-(CF₂)₃-O-(CF₂CF₂CF₂CF₂O)ₙ-(CF₂)₃-CH₂-OH, having an average molecular weight of 850, and an average hydroxyl functionality of 1.64, was prepared from poly(tetramethyleneoxide) diol (commercially available from BASF) by direct fluorination as in Example 1.

100 parts of fluoroelastomer gum A was milled, press-cured, and post-cured as in Example 1, using 20 phr of the above fluorinated ether composition. The results of the tests are shown in Table 1.

### EXAMPLE 9

A fluorinated ether composition comprising the same structure as in example 12, having an average molecular weight of 2700, and an average hydroxyl functionality of 1.6, was prepared as in Example 12.

100 parts of fluoroelastomer gum A was compounded, milled, press-cured, and post-cured as in Example 1, using 20 phr of the above fluorinated ether composition. The results of the tests are shown in Table 1.

### EXAMPLE 10

A fluorinated ether composition comprising the same structure as in Example 8, having an average molecular weight of 1065, and an average hydroxyl functionality of 1.64, was prepared as in Example 8.

100 parts by weight of fluoroelastomer gum A was compounded, milled, press-cured, and post-cured as in Example 1, using 20 phr of the above fluorinated ether composition. The results of the tests are shown in Table 1.

### EXAMPLE 11

A fluorinated ether composition comprising the same structure as in Example 8, having an average molecular weight of 852, and an average hydroxyl functionality of 1.62, was prepared as in Example 8.

100 parts by weight of fluoroelastomer gum B was added, compounded, milled, press-cured, and post-cured as in Example 1, using 20 phr of the above fluorinated ether composition. The results of the tests are shown in Table 1.

### EXAMPLE 12

A fluorinated ether composition comprising the structure HO-CH₂-CF₂-O-(CF₂CF₂OCF₂O)ₙ-CF₂-CH₂-OH, having an average hydroxyl functionality of 1.03, and an average molecular weight of 1050, was prepared by polymerization of dioxolane, followed by fluorination by the technique taught in U.S. Pat. No. 4,755,567. The fluorinated polymer was then cracked into an oil as taught in U.S. Pat. No. 4,894,484. The resulting oil was reacted with methanol and reduced with sodium borohydride.

100 parts by weight of fluoroelastomer gum A was added, compounded, milled, press-cured, and post-cured as in Example 1, using 20 phr of the above fluorinated ether composition. The results of the tests are shown in Table 1.

### EXAMPLE 13

A fluorinated ether composition comprising the same structure as in Example 12, having an average molecular weight of 2600, and an average hydroxyl functionality of 1.03, was prepared as in Example 16A.

100 parts by weight of fluoroelastomer gum A was compounded, milled, press-cured, and post-cured as in Example 1, using 20 phr of the above fluorinated ether composition. The results of the tests are shown in Table 1.

### EXAMPLE 14

A fluorinated ether composition comprising the structure HO-CH₂-CF₂-O-(CF₂CF₂OCF₂CF₂OCF₂O)ₙ-CF₂-CH₂-OH, having an average molecular weight of 1180, and an average hydroxyl functionality of 1.01, was prepared by polymerization of diethylene glycol and formaldehyde, and by fluorination as in Example 12.

100 parts by weight of fluoroelastomer gum A was compounded, milled, press-cured, and post-cured as in Example 1, using 20 phr of the above fluorinated ether composition. The results of the tests are shown in Table 1.

### EXAMPLE 15

A fluorinated ether composition comprising the same structure as in Example 14, having an average molecular weight of 2450, and an average hydroxyl functionality of 1.01, was prepared as in Example 14.

100 parts by weight of fluoroelastomer gum A was compounded, milled, press-cured, and post-cured as in Example 1, using 20 phr of the above fluorinated ether composition. The results of the tests are shown in Table 1.
* This is not within the scope of the appended claims.

### EXAMPLE 16A*

A fluorinated ether composition comprising the structure HO-CH₂-CF₂-CF₂-O-CF₂CF₂-CH₂-OH, having an average molecular weight of 278, and an average hydroxyl functionality of 2.0, was prepared by direct fluorination, as in Example 1, of dimethyl oxydipropionate, which in turn was prepared from 3,3'-oxydipropionitrile (Aldrich Chemical, Milwaukee, WI) by treatment with methanol and acid.

100 parts by weight of fluoroelastomer gum A was compounded, milled, press-cured, and post-cured as in Example 1, using 5 phr of the above fluorinated ether composition. The results of the tests are shown in Table 1.

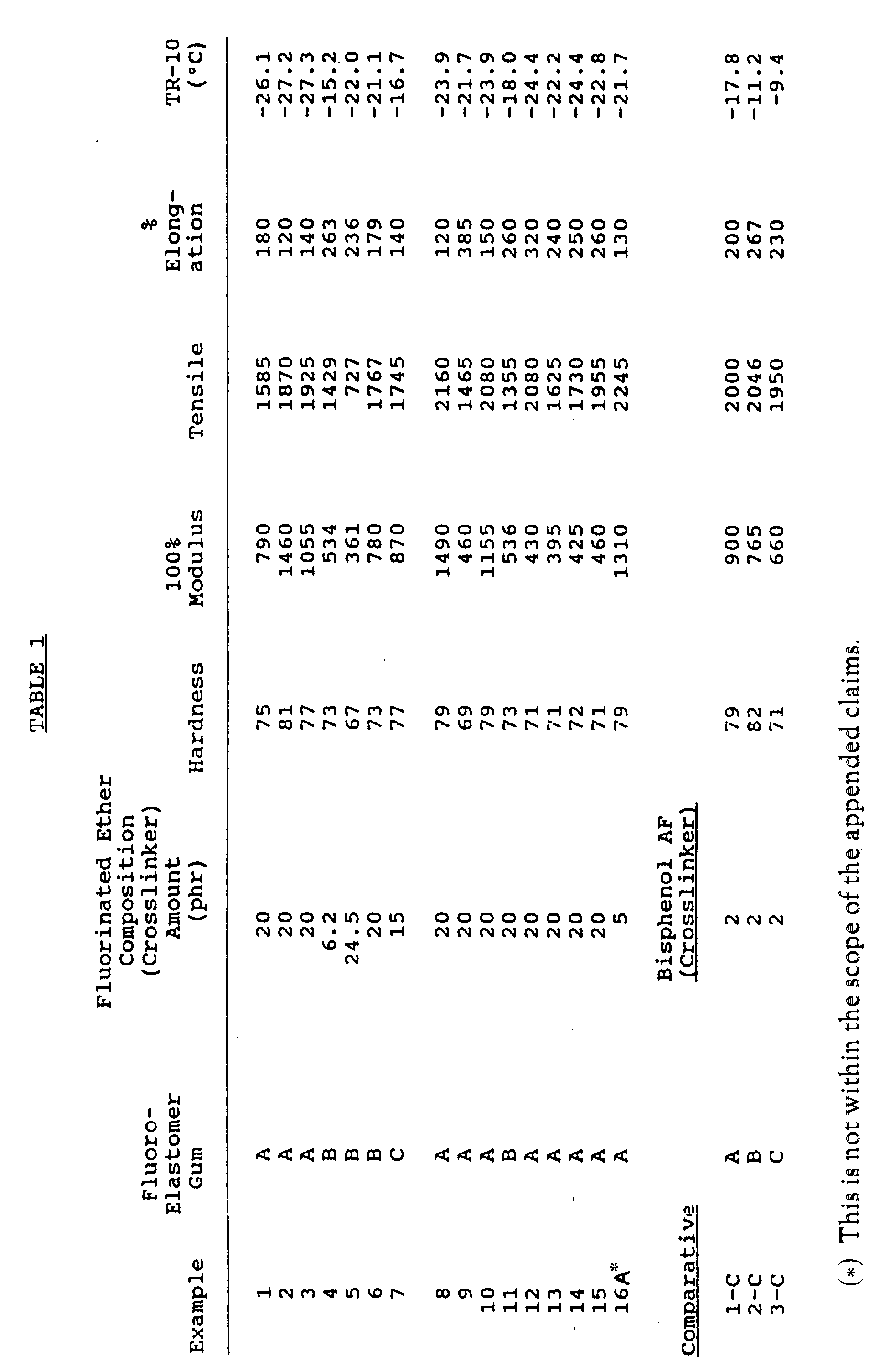

Table 1 shows that fluorinated ether compositions with hydroxyl functionality can be used as crosslinking agents in fluoroelastomer gums to improve the low-temperature performance while retaining the other desired physical properties of the cured fluoroelastomer gum.

Each fluoroelastomer gum composition comprising a fluorinated ether composition resulted in a cured article of lower TR-10 than a corresponding conventional composition. Compare the Examples comprising gum A (TR-10 is from -21.7°C to -27.3°C) to Comparative Example 1-C (TR-10 = -17.8°C). Compare Examples comprising gum B (TR-10 is from -15.2°C to -21.1°C) to Comparative Example 2-C (TR-10 = -11.2°C). Compare Example 7 (TR-10 = -16.7°C) to Comparative Example 3-C (TR-10 = -9.4°C).

Compounded gums in the following Example 16 and Comparative Examples 4-C to 5-C were prepared and their release properties evaluated. A 2.5 cm x 2.5 cm x 1.3 mm thick coupon of each compounded gum was press-cured in a clean mold, cooled, and then peeled out of the mold by hand. The ease or difficulty in peeling the samples out of the mold was evaluated comparatively, assigning a mold-release value of from zero to 4, with a 4 representing the easiest release characteristics.

The press-cured samples were weighed, post-cured, and re-weighed to give the percent weight loss of the sample. For the gum A, an initial composition was made and then further compositions of the same composition were made except with additional materials. The initial composition is Comparative Example 4-C. By comparing the percent weight losses of the initial composition with compositions containing additional materials, and by assuming that any increase in percent weight loss was due to loss of the additional materials, the percent weight loss of the additional materials was calculated.

Compression set of cured compounded gums was determined after 70 hours at 200°C using ASTM D395 method B using a 2.5 cm inside diameter O-ring with a 3.5 mm cross section.

The results of all these evaluations are shown in Table 2.

### Comparative Example 4-C

To 100 parts of fluoroelastomer gum A, using a two-roll mill, was added 0.5 phr of triphenylbenzyl phosphonium chloride, followed by 30 phr of carbon black, 3 phr of MgO, and 6 phr of Ca(OH)₂. To this compounded mixture, 2.0 phr of Bisphenol-AF were milled. Milling continued until a homogeneous blend formed. The gum was press-cured for 15 minutes at 177°C and then post-cured for 24 hours at 232°C.

### Comparative Example 5-C

Fluoroelastomer gum A was compounded as in Comparative Example 4-C, with the addition of 2.5 phr of dichlorodiphenyl sulfone as mold release agent. This compounded mixture was press-cured and post-cured as in Comparative Example 4-C.

### Example 16

A fluorinated ether composition comprising the structure HO-CH₂-CF₂-O-(CF₂CF₂O)ₙCF₂CH₂-OH, having an average molecular weight of 956 and an average hydroxyl value of 1.56, was prepared by direct fluorination of poly(ethylene glycol) (available from Aldrich).

Fluoroelastomer gum A was compounded as in Comparative Example 4-C, with the addition of 4.0 phr of the above fluorinated ether composition. Milling continued until a homogeneous blend formed. The gum was press-cured and post-cured as in Comparative Example 4-C.

**TABLE 2**

| Example | Mold Release Value | % Weight Loss of Additional | Compression Set, % |
|---|---|---|---|
| 16 | 1 | 9 | 17 |
| 4-C | 0 | --- | 17 |
| 5-C | 3 | 100 | 17 |

The data in Table 2 show that the compositions of this invention can provide cured gums with excellent mold release and which do not volatilize or increase the compression set significantly. The molding of conventional fluoroelastomer compounds generally requires the addition of processing agents or mold release additives at the molding step. A general deficiency of current commercial additives is that they either volatilize or cause an increase in compression set. Volatilization is undesirable because it may create pollution problems and shrinkage of the molded part. In Comparative Example 5-C dichlorodiphenyl sulfone was added and, although the mold release was excellent, the dichlorodiphenyl sulfone was volatized.

Compounded gums in the following Examples 17 to 23 and Comparative Examples 6-C to 8-C were prepared and their resistance to scorch evaluated. The results are summarized in Table 3 below.

Many conventional fluoroelastomers generally exhibit a tendency to become "scorchy", i.e., they cure prematurely or too rapidly when compounded. The curing is effected at an elevated temperature by milling in the curing agent and allowing sufficient time at the elevated temperature for the curing agent to react with the elastomer. Although use of many curing agents satisfy the physical properties requirement of the ultimate product by increasing its tensile strength, hardness and elongation, often some undesirable side effects are observed during curing. One of these side effects is called "scorch". Scorch is a function of the activity of the curing agent and the temperature utilized and is said to be the result of too fast or premature curing at some point prior to the final curing of the end product. In the present invention it has been found that the selection of the acid acceptor can decrease the tendency of the compounded gum to scorch. The suitability of a particular acid accepter depends on the particular crosslinking agent used and can be evaluated by using ASTM D-1566 (which measures Mooney scorch).

### Example 17

To 100 parts of fluoroelastomer gum A, using a two-roll mill, was added 0.5 phr of triphenylbenzyl phosphonium chloride, followed by 30 phr of carbon black, 3 phr of MgO, and 6 phr of Ca(OH)₂. To this compounded mixture was,milled 20 phr of the fluoropolyether diol having the structure HO-CH₂CF₂-O-(CF₂CF₂O)ₙCF₂CH₂-OH, having a molecular weight of 844 and a functionality of 1.4. Milling continued until a homogeneous blend formed. The compounded gum was measured for resistance to scorch.

### Example 18

To 100 parts of fluoroelastomer gum A, using a two-roll mill, was added 0.5 phr of triphenylbenzyl phosphonium chloride, followed by 30 phr of carbon black and 20 phr of ZnO. To this compounded mixture was milled 10 phr of the fluoropolyether diol having the structure HO-CH₂CF₂-O-(CF₂CF₂O)ₙCF₂CH₂-OH, having a molecular weight of 844 and a functionality of 1.4. Milling continued until a homogeneous blend formed. The compounded gum was measured for resistance to scorch.

### Example 19

To 100 parts of fluoroelastomer gum A, using a two-roll mill, was added 0.5 phr of triphenylbenzyl phosphonium chloride, followed by 30 phr of carbon black, 20 phr of ZnO, and 2 phr of dibasic lead phosphite (commercially available as Dyphos™ heat stabilizer). To this compounded mixture was milled 20 phr of the fluoropolyether diol having the structure HO-CH₂CF₂-O-(CF₂CF₂O)ₙCF₂CH₂-OH, having a molecular weight of 844 and a functionality of 1.4. Milling continued until a homogeneous blend formed. The compounded gum was measured for resistance to scorch.

### Example 20

To 100 parts of fluoroelastomer gum A, using a two-roll mill, was added 0.5 phr of triphenylbenzyl phosphonium chloride, followed by 30 phr of carbon black, 10 phr of ZnO, and 4 phr of dibasic lead phosphite. To this compounded mixture was milled 20 phr of the fluoropolyether diol having the structure HO-CH₂CF₂-O-(CF₂CF₂O)ₙCF₂CH₂-OH, having a molecular weight of 844 and a functionality of 1.4. Milling continued until a homogeneous blend formed. The compounded gum was measured for resistance to scorch.

### Example 21

To 100 parts of fluoroelastomer gum A, using a two-roll mill, was added 0.5 phr of triphenylbenzyl phosphonium chloride, followed by 30 phr of carbon black, 20 phr of ZnO, and 4 phr of lead oxide. To this compounded mixture was milled 20 phr of the fluoropolyether diol having the structure HO-CH₂CF₂-O-(CF₂CF₂O)ₙCF₂CH₂-OH, having a molecular weight of 844 and a functionality of 1.4. Milling continued until a homogeneous blend formed. The compounded gum was measured for resistance to scorch.

### Example 22

To 100 parts of fluoroelastomer gum B, using a two-roll mill, was added 0.5 phr of triphenylbenzyl phosphonium chloride, followed by 30 phr of carbon black, 3 phr of MgO, and 6 of Ca(OH)₂. To this compounded mixture was milled 20 phr of the fluoropolyether diol having the structure HO-CH₂CF₂-O-(CF₂CF₂O)ₙCF₂CH₂-OH, having a molecular weight of 844 and a functionality of 1.4. Milling continued until a homogeneous blend formed. The compounded gum was measured for resistance to scorch.

### Example 23

To 100 parts of fluoroelastomer gum B, using a two-roll mill, was added 0.5 phr of triphenylbenzyl phosphonium chloride, followed by 30 phr of carbon black, 20 phr of ZnO, and 4 phr of dibasic lead phosphite. To this compounded mixture was milled 20 phr of the fluoropolyether diol having the structure HO-CH₂CF₂-O-(CF₂CF₂O)ₙCF₂CH₂-OH having a molecular weight of 844 and a functionality of 1.4. Milling continued until a homogeneous blend formed. The compounded gum was measured for resistance to scorch.

### Comparative Example 6-C

To 100 parts of fluoroelastomer gum A was added 0.5 phr of triphenylbenzyl phosphonium chloride, followed by 30 phr of carbon black, 3 phr of MgO, and 6 phr of Ca(OH)₂. To this compounded mixture was milled 2.1 phr of Bisphenol AF ("BF6"). Milling continued until a homogeneous blend formed. The compounded gum was measured for resistance to scorch.

### Comparative Example 7-C

To 100 parts of fluoroelastomer gum A, using a two-roll mill, was added 0.5 phr of triphenylbenzyl phosphonium chloride, followed by 30 phr of carbon black, 3 phr of MgO, and 6 phr of Ca(OH)₂. To this compounded mixture was milled 13 phr of fluoropolyether diol described in U.S. 4,810,760 (Streparola et al.) and in U.S. 4,894,418 (Streparola et al.), having a MW of about 2000 and a functionality of 1.9 and available from Ausimont as Fomblin™Z-DOL. The backbone of said fluoropolyether comprises randomly distributed perfluoroethylenoxy units and perfluoromethyleneoxy units. Milling continued until a homogeneous blend formed. The compounded gum was measured for resistance to scorch.

### Comparative Example 8-C

To 100 parts of fluoroelastomer gum A, using a two-roll mill, was added 0.5 phr of triphenylbenzyl phosphonium chloride, followed by 30 phr of carbon black, 20 phr of ZnO, and 6 phr of lead oxide. To this compounded mixture was.milled 13 phr of fluoropolyether diol described in Comparative Example 7-C. Milling continued until a homogeneous blend formed. The compounded gum was measured for resistance to scorch.

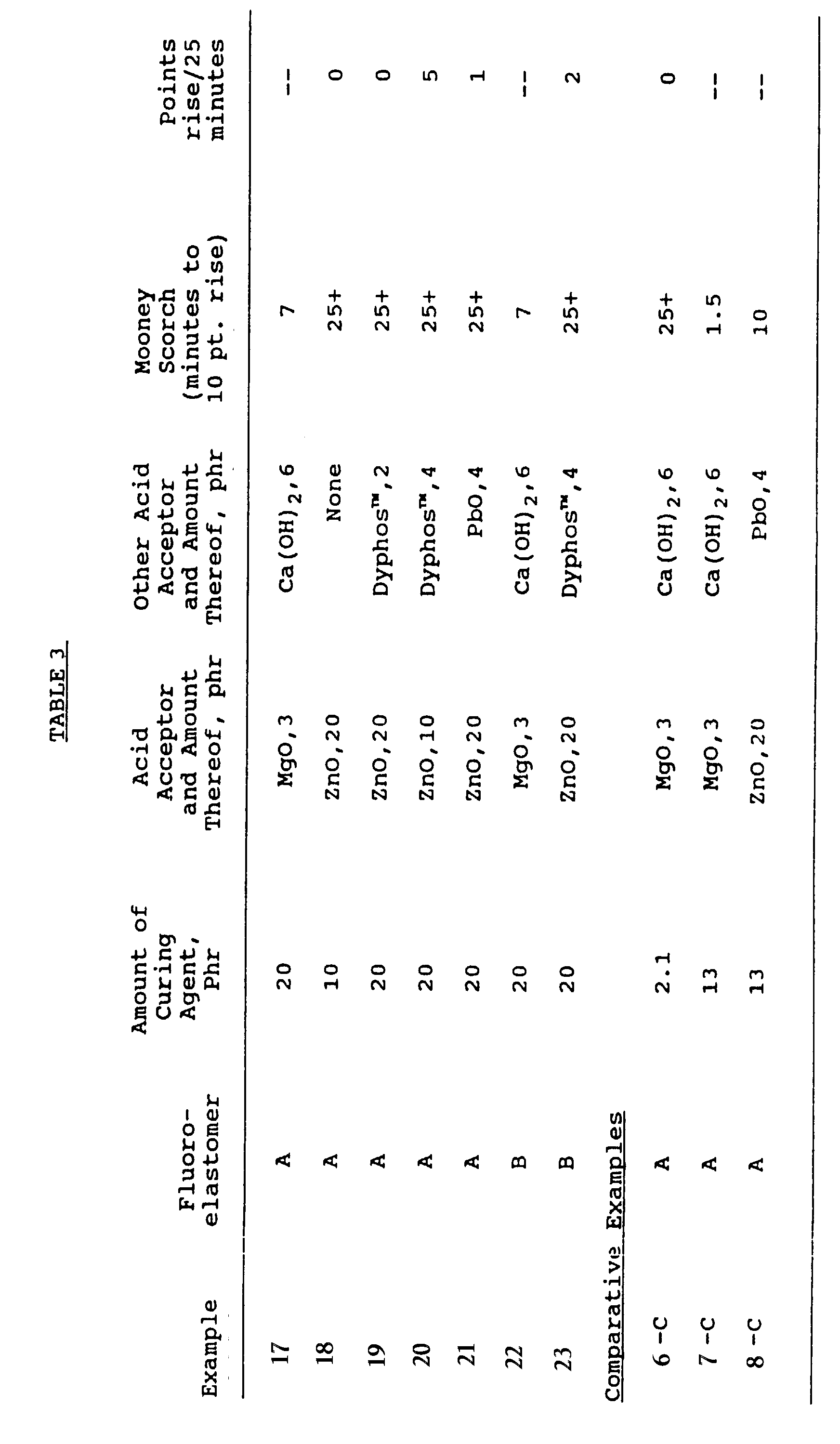

The Mooney scorch data in Table 3 show that resistance to scorch can be affected by the acid acceptor. The data in Table 3 also show that fluoropolyethers of this invention give compounded gums with improved scorch resistance compared to compounded gums comprising the fluoropolyethers used in Comparative Examples 7-C and 8-C.

## Claims

1. A fluorocarbon elastomer composition comprising
(a) fluorocarbon elastomer gum, and
(b) a fluorinated ether composition comprising hydroxy-terminated, fluorinated mono- or polyether of linear and regular structure, wherein said hydroxy is reactive with said gum and the average number of said hydroxy groups per fluorinated ether molecule in said ether composition is greater than 1.0 and less than 2.0

2. The composition of claim 1 wherein said fluorinated ether composition comprises the structure
HO-Q-R_{f}-O-(R_{fo})ₙ-R_{f}-Q-OH
with an average molecular weight between 250 and 3,000;
where
Q is a divalent linking group;
R_{f} is a non-branched, perfluoroalkylene group of 1 to 20 carbon atoms,
R_{fo} is a perfluoroalkyleneoxy group selected from the group consisting of -(CF₂)₂-O-, -(CF₂)₃-O-, -(CF₂)₄-O-, -CF₂-CF₂-O-CF₂-O-, -CF₂-CF₂-O-CF₂-CF₂-O-CF₂-O-;
n is a number from 0 to 30.

3. The composition of claim 2 wherein Q is selected from the group consisting of -C_{y}H_{2y}- where y is 1 to 20, -C₆H₄-, -C₆H₃Cl-, -OC₂H₄-, or combinations thereof.

4. The composition of claim 2 where R_{fo} is -CF₂-CF₂-O-.

5. The composition of claim 1 further comprising a curing system.

6. The composition of claim 1 wherein the amount of said fluorinated ether present is 0.5 to 50 weight percent based on the weight of said gum.

7. The composition of claim 1 wherein said gum comprises a polymer whose interpolymerized units comprise units derived from two or more of the following monomers, CF₂=CH₂, CF₂=CFCF₃, CF₂=CF₂, CH₂=CHCH₃, CF₂=CFOCF₃.

8. The composition of claim 1 wherein said gum comprises a copolymer of vinylidene fluoride, hexafluoropropene, and, optionally, tetrafluoroethylene.

9. The composition of claim 1 wherein said gum comprises a copolymer of vinylidene fluoride, tetrafluoroethylene, and propylene.

10. A method of preparing an elastomer composition, said method comprising mixing
(a) fluorocarbon elastomer gum, and
(b) a fluorinated ether composition comprising hydroxy-terminated, fluorinated mono- or polyether of linear and regular structure, wherein said hydroxy functionality is reactive with said gum and the average number of hydroxy groups per fluorinated ether molecule in said ether composition in greater than 1.0 and less than 2.0

11. The method of claim 10 wherein said fluorinated ether composition is as defined in claim 2.

12. A method of forming a cured elastomeric article, comprising the steps of:
1 ) shaping, at an elevated temperature into the form of an article, a compounded curable fluorocarbon elastomer composition, said elastomer composition being as defined in claim 2, and
2) heating said formed article to cure said compounded composition.

13. The method of claim 12, wherein the compounded curable elastomer composition further comprises a cure system for said gum.

14. A shaped article comprising the composition of claim 1 in its cured state.

## Patentansprüche

1. Fluorelastomermischung, umfassend:
(a) Fluorelastomerkautschuk und
(b) eine Fluorether-Zusammensetzung, umfassend Hydroxyterminierten, fluorierten Mono- oder Polyether linearer und regelmäßiger Struktur, bei welchem das Hydroxy mit dem Kautschuk reaktionsfähig ist und die mittlere Zahl der Hydroxy-Gruppen pro Fluorether-Molekül größer ist als 1,0 und kleiner ist als 2,0.

2. Mischung nach Anspruch 1, bei welcher die Fluorether-Zusammensetzung die Struktur aufweist:
HO-Q-R_{f}-O-(R_{fo})ₙ-R_{f}-Q-OH
mit einer mittleren relativen Molekülmasse zwischen 250 und 3.000, wobei Q eine zweiwertige verknüpfende Gruppe ist;
R_{f} ist eine nichtverzweigte Perfluoralkylen-Gruppe mit 1 ... 20 Kohlenstoffatomen; R_{fo} ist eine Perfluoralkylenoxy-Gruppe, ausgewählt aus der Gruppe, bestehend aus: -(CF₂)₂-O-;-(CF₂)₃-O-; -(CF₂)₄-O-;-CF₂-CF₂-O-CF₂-O-; -CF₂-CF₂-O-CF₂-CF₂-O-CF₂-O-; n ist eine ganze Zahl von = ... 30.

3. Mischung nach Anspruch 2, bei welcher Q ausgewählt wird aus der Gruppe, bestehend aus -C_{y}H_{2y}-, worin y 1 ... 20 ist, -C₆H₄-, C₆H₃Cl; -OC₂H₄- oder Kombinationen davon.

4. Mischung nach Anspruch 2, bei welcher R_{fo} -CF₂-CF₂-O- ist.

5. Mischung nach Anspruch 1, ferner umfassend ein Vulkanisiersystem.

6. Mischung nach Anspruch 1, bei welcher der Fluorether bezogen auf die Masse des Kautschuks in einer Menge von 0,5 % ... 50 Gewichtsprozent vorliegt.

7. Mischung nach Anspruch 1, bei welcher der Kautschuk ein Polymer umfaßt, dessen interpolymerisierte Einheiten solche Einheiten aufweisen, die deriviert sind von zwei oder mehreren der folgenden Monomere: CF₂=CH₂; CF₂=CF₂CF₃; CF₂=CF₂; CH₂=CHCH₃; CF₂=CFOCF₃.

8. Mischung nach Anspruch 1, bei welcher der Kautschuk ein Copolymer aus Vinylidenfluorid, Hexafluorpropen und wahlweise Tetrafluorethylen umfaßt.

9. Mischung nach Anspruch 1, bei welcher der Kautschuk ein Copolymer aus Vinylidenfluorid, Hexafluorpropen und Propylen umfaßt.

10. Verfahren zum Herstellen einer Elastomermischung, umfassend das Mischen von:
(a) Fluorelastomerkautschuk und
(b) einer Fluorether-Zusammensetzung, umfassend Hydroxyterminierten, fluorierten Mono- oder Polyether linearer und regelmäßiger Struktur, bei welchem die Hydroxy-Funktionalität mit dem Kautschuk reaktionsfähig ist und die mittlere Zahl der Hydroxy-Gruppen pro Fluorether-Molekül größer ist als 1,0 und kleiner ist als 2,0.

11. Verfahren nach Anspruch 10, bei welchem die Fluorether-Zusammensetzung wie in Anspruch 2 festgelegt ist.

12. Verfahren zum Formen eines vulkanisierten Elastomerartikels, umfassend die Schritte:
(1) Formen einer compoundierten, vulkanisierbaren Fluorelastomermischung zur Form eines Artikels bei einer erhöhten Temperatur, wobei die Elastomermischung in Anspruch 2 festgelegt ist; und
(2) Erhitzen des geformten Artikels, um die compoundierte Mischung zu vulkanisieren.

13. Verfahren nach Anspruch 12, bei welchem die compoundierte, vulkanisierbare Fluorelastomermischung ferner ein Vulkanisiersystem für den Kautschuk umfaßt

14. Formartikel, umfassend die Mischung nach Anspruch 1 in ihrem vulkanisierten Zustand.

## Revendications

1. Composition d'élastomère de fluorocarbone comprenant
(a) une gomme d'élastomère de fluorocarbone, et
(b) une composition d'éther fluoré comprenant un mono- ou polyéther fluoré, à terminaison hydroxy de structure linéaire et régulière, dans laquelle ledit hydroxy est réactif avec ladite gomme et le nombre moyen de ces groupes hydroxy par molécule d'éther fluoré dans ladite composition d'éther est supérieur à 1,0 et inférieur à 2,0.

2. Composition suivant la revendication 1, dans laquelle la composition d'éther fluoré susdite comprend la structure :
HO-Q-R_{f}-O-(R_{fo})ₙ-R_{f}-Q-OH I
avec un poids moléculaire moyen entre 250 et 3.000,
dans laquelle
Q est un groupe de liaison divalent,
R_{f} est un groupe perfluoroalkylène, non ramifié de 1 à 20 atomes de carbone,
R_{fo} est un groupe perfluoroalkylénoxy choisi dans le groupe comprenant -(CF₂)₂-O-, -(CF₂)₃-O-, -(CF₂)₄-O-, -CF₂-CF₂-O-CF₂-O-,
-CF₂-CF₂-O-CF₂-CF₂-O-CF₂-O-, et n est un nombre de 0 à 30.

3. Composition suivant la revendication 2, dans laquelle Q est choisi dans le groupe comprenant -C_{y}H_{2y}- où y vaut de 1 à 20, -C₆H₄-, -C₆H₃Cl-, -OC₂H₄- et leurs combinaisons.

4. Composition suivant la revendication 2, dans laquelle R_{fo} est -CF₂-CF₂-O-.

5. Composition suivant la revendication 1, comprenant de plus un système de durcissement.

6. Composition suivant la revendication 1, dans laquelle la quantité de l'éther fluoré présent est de 0,5 à 50 % en poids par rapport au poids de la gomme précitée.

7. Composition suivant la revendication 1, dans laquelle la gomme comprend un polymère dont les unités interpolymérisées comprennent des unités provenant de deux ou plusieurs des monomères suivants : CF₂=CH₂, CF₂=CFCF₃, CF₂=CF₂, CH₂=CHCH₃, CF₂=CFOCF₃.

8. Composition suivant la revendication 1, dans laquelle la gomme comprend un copolymère de fluorure de vinylidène, d'hexafluoropropène et, éventuellement, de tétrafluoroéthylène.

9. Composition suivant la revendication 1, dans laquelle la gomme comprend un copolymère de fluorure de vinylidène, de tétrafluoroéthylène et de propylène.

10. Procédé de préparation d'une composition d'élastomère, ledit procédé comprenant le mélange
(a) de gomme d'élastomère de fluorocarbone, et
(b) d'une composition d'éther fluoré comprenant un mono- ou polyéther fluoré, à terminaison hydroxy de structure linéaire et régulière, dans laquelle ladite fonctionnalité hydroxy est réactive avec ladite gomme et le nombre moyen de groupes hydroxy par molécule d'éther fluoré dans ladite composition d'éther est supérieur à 1,0 et inférieur à 2,0.

11. Procédé suivant la revendication 10, dans lequel la composition d'éther fluoré est telle que définie à la revendication 2.

12. Procédé de formation d'un article élastomère durci, comprenant les étapes :
1) de façonnage, à une température élevée sous la forme d'un article, d'une composition d'élastomère de fluorocarbone durcissable combinée, ladite composition d'élastomère étant telle que définie à la revendication 2, et
2) de chauffage dudit article formé pour durcir ladite composition combinée.

13. Procédé suivant la revendication 12, dans lequel la composition d'élastomère durcissable combinée comprend de plus un système de durcissement pour la gomme précitée.

14. Article façonné comprenant la composition de la revendication 1 dans son état durci.
